# EUROPÄISCHE PATENTSCHRIFT

(11) **EP 1 871 635 B1**
(45) Veröffentlichungstag und Bekanntmachung des Hinweises auf die Patenterteilung: **30.06.2010**
(21) Anmeldenummer: 05737808.5
(22) Anmeldetag: 22.04.2005
(51) Int. Cl.: B60K 37/06, B60K 35/00, G06F 3/033

(54) **VORRICHTUNG ZUR INFORMATION EINES FAHRZEUGBENUTZERS**
DEVICE FOR PROVIDING A VEHICLE USER WITH INFORMATION
DISPOSITIF POUR FOURNIR DES INFORMATIONS A UN UTILISATEUR DE VEHICULE

(43) Veröffentlichungstag der Anmeldung: 02.01.2008
(73) Patentinhaber: Bayerische Motoren Werke Aktiengesellschaft, 80809 München (DE)
(72) Erfinder: KOLITSCH, Jörg, 80798 München (DE); GNUGESSER, Timo, White Plains 10605 New York (US); SIMON, Julien, 80802 München (DE)
(86) Internationale Anmeldenummer: PCT/EP2005/004371
(87) Internationale Veröffentlichungsnummer: WO 2006/114111

(56) Entgegenhaltungen:
- EP-A- 0 980 782
- DE-A1- 10 341 471
- US-A1- 2002 198 635

## Beschreibung

Die Erfindung bezieht sich auf eine Vorrichtung mit den im Oberbegriff des Patentanspruchs 1 angegebenen Merkmalen.

Eine derartige Vorrichtung ist aus der EP 980 782 B1 bekannt. Der Drehsteller ist im Uhrzeigersinn und im Gegenuhrzeigersinn um eine Längsachse drehbar und quer zur Längsachse auslenkbar. Durch die Drehbewegung des Drehstellers ist die Größe der im Fenster angezeigten Bildeinzelheit und durch die Querbewegung des Drehstellers die Lage des Fensters innerhalb des Bildschirms einstellbar. Zusätzlich sind für die Drehbewegung des Drehstellers Raststellungen vorgesehen. Jeder Raststellung ist der Vergrößerungsfaktor für eine Bildeinzelheit zugeordnet. Durch Ausführen der Axial-Bewegung des Drehstellers sind dem Funktionselement zugeordnete Bedien-Hinweise auf dem Bildschirm darstellbar.

Zusätzlich ist aus der DE 38 36 555 A1 eine Vorrichtung zur Information eines Fahrzeugbenutzers über verschiedene Funktionselemente mittels eines Bildschirmanzeigesystems bekannt. Dabei wird mit einem mit Raststellungen versehenen Drehsteller eine menüartige Bildinformation gesteuert. Die hierarchisch aus Menü, Untermenü und Funktionen bestehende Funktionsstruktur wird mittels des Drehstellers angewählt und eine zugeordnete Bildinformation auf einem Bildschirm wiedergegeben. Der Drehsteller ist dabei primär zur Navigation durch die Funktionsstruktur eingesetzt. Die wiedergegebene Bildinformation ergibt sich in Folge des jeweils ausgewählten Knotenpunkts der Funktionshierarchie und besteht im Wesentlichen aus der Bezeichnung des jeweils angewählten Knotenpunkts.

Der Erfindung liegt die Aufgabe zugrunde, eine Vorrichtung der eingangs genannten Art zu schaffen, bei dem die wiedergebbare Bildinformation stärker den Informationsbedürfnissen des Fahrzeugbenutzers angepasst wird.

Die Erfindung löst diese Aufgabe mit den im Patentanspruch 1 abgegebenen Merkmalen.

Der Drehsteller dient nunmehr primär der Steuerung der Bildschirmanzeige und zwar in der Weise, dass mit dem Drehsteller das Funktionselement und anschließend eine zugehörige optische Information auswählbar sind. Diese Information wird ähnlich einer Zoom-Funktion als vergrößerter Ausschnitt des vorher dargestellten Übersichtsbild wiedergegeben.

Dieses Zoomen kann mehrmals hintereinander ausgeführt werden. Dabei wird beispielsweise ausgehend von einem Übersichtsbild des Fahrtzeuginnenraums der Bereich um das Lenkrad "herangezoomt" und anschließend der darin enthaltene Lenkstockschalter vergrößert wiedergegeben. Anschließend kann ein darauf angeordneter Zusatzschalter vergrößert dargestellt werden.

Wichtig für dieses durch jeweils eine Axialbewegung des Drehstellers schrittweise ausgeführte Auswählen des letztendlich interessierenden Funktionselements, hier des Zusatzschalters, ist der Umstand, dass für den Fahrzeugnutzer der Kontext, d. h. die jeweilige Bild-Umgebung, erhalten und damit erkennbar bleibt. Jedes Bild ist im zugehörigen und in der Reihenfolge vorhergehend ausgewählten Übersichtsbild enthalten.

Aufeinanderfolgende Bilder unterscheiden sich im Wesentlichen nur durch den Vergrößerungsfaktor und die Größe des insgesamt dargestellten Bildausschnitts. Es ist dabei jedoch auch möglich, die Informationsvermittlung des jeweiligen Bildes noch zu vergrößern, indem zusätzliche grafische oder textuelle Informationen bedarfsweise in das jeweilige Bild eingeblendet werden.

Werden die Funktionselemente im Übersichtsbild durch Drehen des Drehstellers nacheinander "angefahren" und durch Verrasten des Drehstellers an der betreffenden Bildstelle ausgewählt, können zu ihrem Bild ferner ihre Bezeichnung oder eine aussagekräftige Grafik darstellbar sein. Es ist auch möglich, mehrere dieser Darstellungsformen gleichzeitig vorzusehen, beispielsweise sowohl die Bezeichnung als auch das Bild des Funktionselements darzustellen.

Eine weitere Verbesserung der Darstellung und damit des Verständnisses für die Lage und Bedienbarkeit des jeweiligen Funktionselements ergibt sich, wenn es bei Einstellen der Raststellung optisch hervorgehoben ist.

Wird bei Einstellen einer Raststellung zusätzlich eine Beschreibung der mit dem Funktionselement auslösbaren Funktion wiedergegeben, ergibt sich eine weitere Verbesserung der Bedienerfreundlichkeit.

Demselben Ziel dient die Möglichkeit, bei Einstellen einer Raststellung zusätzlich eine Filmsequenz zur Erläuterung der mit dem Funktionselement auslösbaren Funktion wiederzugeben.

Erkennt der Benutzer, dass er sich geirrt hat oder möchte er aus einem anderen Grund die Informationen über das jeweilige Funktionselement nicht aktivieren, ist die Möglichkeit, auf einen willkürlichen Bedienbefehl hin wieder das Übersichtsbild anzuzeigen, eine deutliche Hilfe für ihn. Er kann damit wieder in das vorhergehende Übersichtsbild gelangen. Beispielsweise wird eine ablaufende Filmsequenz sofort unterbrochen. Dies kann beispielsweise durch eine separate "Zurück"-Taste oder durch eine Zurück-Funktion erreicht werden, die wie ein Funktionselement auswählbar und durch Axialbewegung des Drehstellers aktivierbar ist.

Im Rahmen der Erfindung kommt sowohl ein reversibles Hineindrücken, als auch ein entsprechendes Herausziehen als Axialbewegung für den Drehsteller in Betracht. In beiden Fällen wird die nachfolgende Informationsgewinnung intuitiv unterstützt. Handelt es sich um ein Hineindrücken des Drehstellers, dringt der Benutzer quasi tiefer in das Funktionselement ein. Ist die Informationsgewinnung an ein Herausziehen des Drehstellers gebunden, zieht der Benutzer diese Information quasi aus dem Funktionselement heraus.

Zusätzlich kann die bildliche Information auch durch eine akustische Information ergänzt sein. Es kann beispielsweise die Wirkungsweise des Funktionselements erläutert sein.

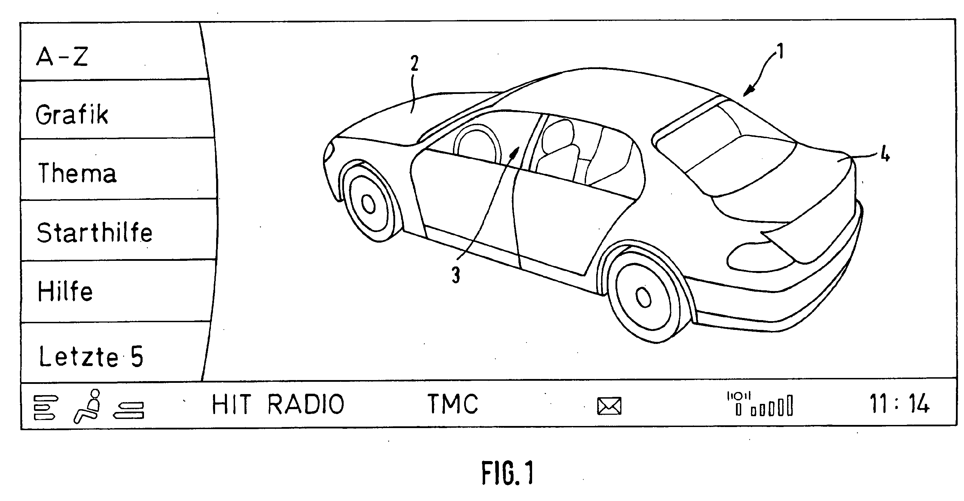

Zur näheren Erläuterung ist ein Beispiel für die Erfindung in der Zeichnung dargestellt. Diese zeigt in den Figuren 1 bis 4 den Ablauf einer virtuellen Entdeckungsreise, bei der dem Fahrzeugbenutzer nach wenigen Handgriffen eine einfache Hilfe zur Bedienung eines Geschwindigkeitsregelsystems (Tempomat) gegeben wird.

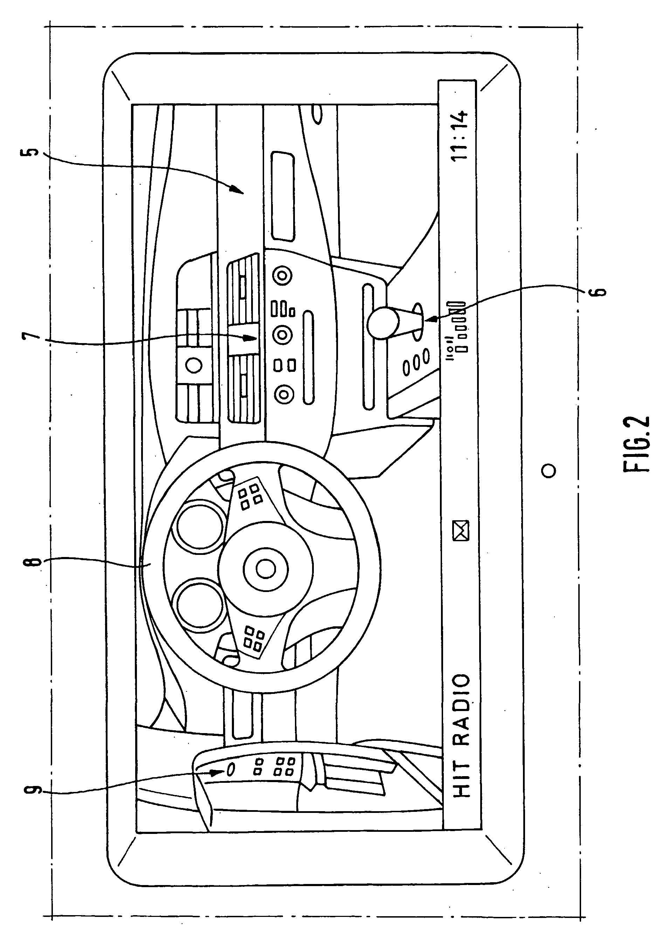

Ausgehend von Fig. 1, in der ein Kraftfahrzeug 1 in perspektivischer Ansicht gezeigt ist, werden, ausgelöst durch eine Axialbewegung eines aus der DE 38 36 555 A1 bekannten, hier nicht dargestellten Dreh-Druckstellers (weiter unter auch "Controller" genannt) als Drehsteller drei Bereiche des Kraftfahrzeugs optisch voneinander hervorgehoben: die Motorhaube 2, der Innenraum 3 und die Heckklappe 4. Die Teile 2, 3 und 4 sind individuell durch eine Dreh-Rastbewegung des Drehstellers auswählbar. Ist eines davon ausgewählt, hier der Innenraum 3, ändert sich auf eine Axialbewegung des Drehstellers hin das Bild und es erscheint die in Fig. 2 wiedergegebene Ansicht des Innenraums 3.

Dabei sind - oder werden nach einer weiteren Axialbewegung des Drehstellers - verschiedene Bereiche optisch voneinander unterschieden: der Armaturenbrettbereich 5 des Beifahrers, die Schaltkonsole 6, das Bedienfeld 7 der Heiz-Klimaanlage (nicht weiter dargestellt), der Bereich 8 des Lenkrads und das Schalterfeld 9 an der Fahrertür.

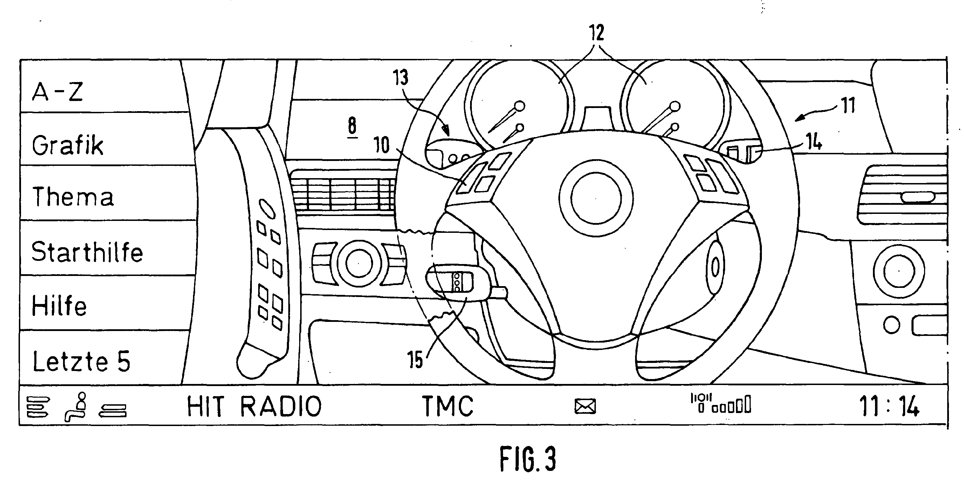

Die Bereiche 5 bis 9 sind durch eine Dreh-Rastbewegung des Drehstellers individuell auswählbar. Hier wird der Bereich 8 ausgewählt. Durch Axialbewegung des Drehstellers erscheint als nächstes der Bereich 8 in vergrößerter Darstellung (Fig. 3).

Die einzelnen Funktionselemente, hier das linke Lenkrad-Funktionsschalterfeld 10, das rechte Lenkrad-Funktionsschalterfeld 11, das Kombiinstrument 12, der Reinigungsfunktionshebel 13, der Fahrtrichtungsgeber 14 und der Tempomatsteller 15 sind optisch hervorgehoben und durch Drehen/Rasten des Drehstellers auswählbar. Zusätzlich kann bei Auswahl dieser Funktionselemente 10 - 15 eine zugehörige Kurzbeschreibung, z. B. "Tempomat" nach Art eines "Help-Bubbles" im Bild oder daneben erscheinen.

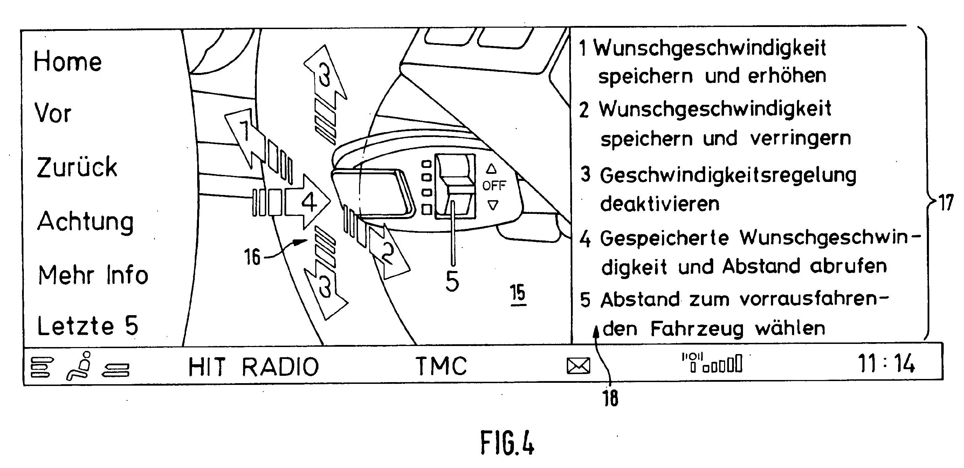

Wird das Teil 15 ausgewählt, erscheint nach Axialbewegung des Drehstellers das in Fig. 4 wiedergegebene vergrößerte Bild verbunden mit einer Grafik 16 zur Erläuterung der Stellmöglichkeiten des Tempomatstellers 15 sowie einer mit 1, 2,...5 bezeichneten Erläuterung 17 der fünf verschiedenen Bedienmöglichkeiten.

Hier besteht die Möglichkeit, eine der Erläuterung 1, 2,...5 durch Drehen/Rasten des Drehstellers auszuwählen und durch Axialbewegung detailliertere Erläuterungen auf dem Bildschirm 18 zu erhalten (nicht dargestellt).

Jederzeit ist es möglich, in das vorhergehende Bild "zurückzuspringen". Hierzu dient eine Return-Taste 19, die auch mehrmals hintereinander bedient werden kann.

Am linken Rand des Bildschirms sind ferner die Felder A - Z, Grafik, Thema, Starthilfe und "Letzte 5" dargestellt. Dabei handelt es sich um verschiedene Einstiegsmöglichkeiten in die EBA ("**E**lektronische **B**etriebs-**A**nleitung"). Durch Drehen und Drücken des Controllers können die Felder ausgewählt werden.

Durch Auswahl eines der Felder erreicht man folgendes:
**A - Z:** Man gelangt zur Stichwortsuche. Ein Alphabet ermöglicht es, Buchstaben auszuwählen. Anschließend werden die Themen mit demselben Anfangsbuchstaben aufgelistet. Je mehr Buchstaben eingegeben werden, desto weniger Themen treffen auf die Eingabe zu, also wird die Auswahl geringer. Durch die Stichwortsuche kann ein spezielles Thema schnell gefunden werden.

**Grafik:** Kann man das gesuchte Thema nicht benennen, kann es über eine grafische Darstellung des Fahrzeugs gefunden werden. Durch Drehen des Controllers können verschiedene Bereiche auf dem Bildschirm markiert und anschließend durch Drücken des Drehstellers ausgewählt werden. Dadurch kann das gesuchte Thema eingegrenzt werden und in einem anschließenden Menü präzisiert werden.

**Thema:** Hier sind die einzelnen Themen in Rubriken eingeteilt z. B. Fahrtipps oder Kommunikation. Wählt man eine Rubrik aus, gelangt man an die dazugehörenden Themen und kann so immer tiefer in die EBA einsteigen, bis das gesuchte Thema erreicht ist.

**Starthilfe:** Hier befindet sich der Kurzüberblick über das Fahrzeug. Hier wird vor allem gezeigt, wo sich was im Fahrzeug befindet und welche Funktion sich hinter den verschiedenen Tasten und Hebeln rund ums Lenkrad verbergen. Zudem werden Grundprinzipien von einzelnen Bedienfunktionen, z. B. iDrive, kurz erklärt.

**Letzte 5:** Die letzen fünf aufgerufene Themen der EBA werden hier aufgelistet und können ohne erneute Suche noch mal ausgewählt werden.

Bei Auswahl der Motorhaube 2 oder der Heckklappe 4 erhält der Nutzer entsprechende Informationen über die Lage und Bedienung der verschiedenen Nachfüllvorrichtungen für Betriebs- und Verbrauchsstoffe bzw. die Anordnung und Bedienung der im Kofferraum angeordneten Fahrzeugkomponenten.

Auf diese Weise erhält der Fahrzeugnutzer auf dem Bildschirm eine optimal an seine Bedürfnisse angepasste Information über die einzelnen Funktionselemente des Fahrzeugs.

## Patentansprüche

1. Vorrichtung zur Information eines Fahrzeugbenutzers über verschiedene Funktionselemente (10, 11, 12, 13, 14, 15) mittels eines Bildschirmanzeigesystems (18), mit einem Übersichtsbild zur Darstellung der Funktionselemente, mit einem den Funktionselementen zugeordneten, willkürlich um seine Achse drehbaren Drehsteller zur individuellen Auswahl der Funktionselemente, und mit der Eigenschaft, weitere Informationen über das jeweilige Funktionselement mittels einer Axialbewegung des Drehstellers zur Anzeige zu bringen, **dadurch gekennzeichnet, dass** die Funktionselemente im Übersichtsbild markiert sind, dass die Funktionselemente durch eine **Dreh-Rastbewegung** des Drehstellers individuell auswählbar sind, und dass als Information ein das jeweilige Funktionselement enthaltender vergrößerter Ausschnitt des Übersichtsbildes anzeigbar ist, wobei der vergrößerte Ausschnitt durch die Axialbewegung des Drehstellers aufrufbar ist.

2. Vorrichtung nach Anspruch 1, **dadurch gekennzeichnet, dass** bei Einstellen einer Raststellung des Drehstellers das jeweilige Funktionselement (15) optisch hervorgehoben ist.

3. Vorrichtung nach Anspruch 1 oder 2, **dadurch gekennzeichnet, dass** bei Einstellen der Raststellung zusätzlich eine Bezeichnung ("Tempomat") des Funktionselements (15) dargestellt ist.

4. Vorrichtung nach einem der Ansprüche 1 bis 3, **dadurch gekennzeichnet, dass** bei Einstellen der Raststellung zusätzlich eine Beschreibung (17) der dem Funktionselement (15) zugeordneten Funktion darstellbar ist.

5. Vorrichtung nach einem der Ansprüche 1 bis 4, **dadurch gekennzeichnet, dass** bei Einstellen der Raststellung zusätzlich eine Filmsequenz zur Erläuterung der mit dem Funktionselement auslösbaren Funktion darstellbar ist.

6. Vorrichtung nach einem der Ansprüche 1 bis 5, **dadurch gekennzeichnet, dass** auf einen Bedienbefehl (Returntaste 19) hin wieder das vorhergehende Übersichtsbild anzeigbar ist.

## Claims

1. A device for informing a user of a vehicle about various functional elements (10, 11, 12, 13, 14, 15), by means of a display screen system (18), with an overview image for showing the functional elements, with a rotary actuator associated with the functional elements, which can be rotated arbitrarily about its axis, to individually select the functional elements, and with the property of displaying further information about the respective functional element by means of an axial movement of the rotary actuator, **characterised in that** the functional elements are marked in the overview image, **in that** the functional elements can be individually selected by a rotary detent movement of the rotary actuator, and **in that** an enlarged detail of the overview image containing the respective functional element can be displayed as information, it being possibly to access the enlarged detail by the axial movement of the rotary actuator.

2. A device according to claim 1, **characterised in that** on setting a detent position of the rotary actuator, the respective functional element (15) is visually emphasised.

3. A device according to claim 1 or 2, **characterised in that** when setting the detent position, a designation ("cruise control") of the functional element (15) is also shown.

4. A device according to any one of claims 1 to 3, **characterised in that** when setting the detent position, a description (17) of the function associated with the functional position (15) can also be shown.

5. A device according to any one of claims 1 to 4, **characterised in that** when setting the detent position, a film sequence can also be shown to explain the function which can be triggered by the functional element.

6. A device according to any one of claims 1 to 5, **characterised in that** the previous overview image can be displayed again upon an operating command (return key 19).

## Revendications

1. Dispositif pour informer l'utilisateur d'un véhicule des différents éléments fonctionnels (10, 11, 12, 13, 14, 15) à l'aide d'un système d'affichage par écran (18) avec une image globale pour représenter les éléments fonctionnels, un bouton tournant arbitrairement autour de son axe associé aux éléments fonctionnels pour sélectionner individuellement les éléments fonctionnels, et ayant la propriété d'afficher d'autres informations concernant l'élément fonctionnel respectif par le mouvement axial du bouton tournant,
**caractérisé en ce que**
- les éléments fonctionnels sont marqués dans l'image globale,
- les éléments fonctionnels se sélectionnent individuellement par un mouvement de rotation avec encliquetage du bouton tournant, et
- un détail agrandi de l'image d'ensemble comportant l'élément fonctionnel respectif est affiché comme information,
- le détail agrandi peut être appelé par le mouvement axial du bouton tournant.

2. Dispositif selon la revendication 1,
**caractérisé en ce que**
l'élément fonctionnel (15) respectif, est mis optiquement en avant, lorsqu'on règle une position d'arrêt du bouton tournant.

3. Dispositif selon la revendication 1 ou 2,
**caractérisé en ce qu'**
en réglant la position d'arrêt, on représente en outre la dénomination (« Tempomat ») de l'élément fonctionnel (15).

4. Dispositif selon l'une des revendications 1 à 3,
**caractérisé en ce qu'**
le réglage de la position d'arrêt présente en outre une description (17) de la fonction associée à l'élément fonctionnel (15).

5. Dispositif selon l'une des revendications 1 à 4,
**caractérisé en ce qu'**
le réglage de la position d'arrêt présente en outre une séquence filmée décrivant la fonction qui se déclenche avec l'élément fonctionnel.

6. Dispositif selon l'une des revendications 1 à 5,
**caractérisé en ce que**
sur un ordre de service (touche de retour 19), il affiche de nouveau l'image globale précédente.
